Europäisches Patentamt

European Patent Office

Office européen des brevets

(19)

(11) **EP 0 606 802 B1**

(12) # FASCICULE DE BREVET EUROPEEN

(45) Date de publication et mention
de la délivrance du brevet:
**23.07.1997 Bulletin 1997/30**

(51) Int Cl.$^6$: **G06F 11/28**

(21) Numéro de dépôt: **93403174.1**

(22) Date de dépôt: **27.12.1993**

(54) **Procédé de détection des erreurs d'exécution d'un logiciel**

Verfahren zum Erfassen von Ausführungsfehlern in einem Programm

Method for detecting program execution errors

(84) Etats contractants désignés:
**AT BE CH DE DK ES FR GB GR IT LI LU NL PT SE**

(30) Priorité: **31.12.1992 FR 9215990**

(43) Date de publication de la demande:
**20.07.1994 Bulletin 1994/29**

(73) Titulaire: **GEC ALSTHOM TRANSPORT SA**
**75016 Paris (FR)**

(72) Inventeurs:
- **Bres, Guillaume**
  **F-92120 Montrouge (FR)**
- **Simon, François**
  **F-91290 Arpajon (FR)**

(74) Mandataire: **Fournier, Michel et al**
**c/o ALCATEL ALSTHOM,**
**Département de Propriété Industrielle,**
**30, avenue Kléber**
**75116 Paris (FR)**

(56) Documents cités:
**EP-A- 0 445 936**

- **IEEE TRANSACTIONS ON COMPUTERS vol. 37, no. 2 , Février 1988 , NEW YORK US pages 160 - 174 AAMER MAHMOOD 'Concurrent Error Detection Using Watchdog Processors - A Survey'**
- **1982 INTERNATIONAL TEST CONFERENCE 18 Novembre 1982 , PHILADELPHIA pages 461 - 468 MASOOD NAMJOO 'Techniques for concurrent testing of VLSI processor operation'**

**Description**

La présente invention concerne un procédé de détection des erreurs d'exécution d'un logiciel et s'applique notamment, mais de manière non limitative, à la détection en cours de fonctionnement des erreurs d'exécution de logiciels industriels de gestion ou de contrôle de réseaux, tels que des réseaux ferroviaires, des réseaux de télécommunications, ou de logiciels d'aide au pilotage dans des avions par exemple.

De manière schématique, un logiciel peut être représenté par un ensemble d'instructions élémentaires constituant les sommets d'un graphe et reliées entre elles par des branchements constituant les arcs du graphe. Ces instructions peuvent être :

- des opérations (addition, soustraction, multiplication, division, ET logique, noté ∧, OU logique, noté ∨, OU exclusif, noté ⊕, etc...) mettant en jeu un opérateur, noté T, et plusieurs opérandes, deux par exemple notés x et y ; l'opérateur T appliqué aux opérandes x et y met à jour le contenu d'une variable, notée r, en lui affectant la valeur xTy,
- des tests conditionnels du type "if EXPR then ... else ...", où EXPR est de manière générale une condition du type "x ≥ 0 ?" ou "x = constante ?",
- des instructions de branchements inconditionnels appelées instructions de destination, du type "goto" ou "stop".

Le modèle précédent permet de représenter schématiquement tous les types de logiciels écrits au moyen de langages séquentiels courants.

Selon le schéma de représentation précédent, chaque exécution d'un logiciel correspond à un parcours ou chemin particulier dans le graphe représentant le logiciel, ce chemin dépendant des résultats des opérations et de ceux des tests conditionnels en fonction des valeurs particulières prises par les variables au cours de l'exécution concernée.

En outre, chaque parcours autorisé dans le graphe, c'est-à-dire correspondant à une suite possible d'instructions reliées entre elles par des branchements, est appelé chemin licite.

Pour qu'un chemin exécuté soit considéré comme sans erreurs, et donc que le résultat de l'exécution correspondante soit considéré comme exact, il faut que les conditions suivantes soient réunies :

- la suite des instructions exécutées (chemin exécuté) correspond à un chemin licite dans le graphe, c'est-à-dire qu'aucune instruction n'a été ajoutée ou supprimée par rapport à ce qui était prévu à la compilation,
- pour les instructions de tests, le choix de l'instruction suivante est correct en fonction du résultat du test exécuté, et pour les instructions de destination, l'instruction suivante est bien celle prévue (on dit alors que le chemin exécuté est correct),
- chaque instruction d'opération est effectuée en utilisant l'opérateur prévu (dans le cas contraire, on dit qu'il y a une erreur opératoire),
- les opérandes utilisés au sein des instructions d'opérations et de test sont ceux attendus (dans le cas contraire, on dit qu'il y a une erreur de dépendance).

Si le chemin exécuté n'est pas licite ou n'est pas correct, on dit qu'il y a une erreur de flot d'exécution.

Plusieurs procédés de détection des erreurs d'exécution d'un logiciel sont connus actuellement.

Certains de ces procédés, appelés méthodes par processeurs codés ou plus simplement processeurs codés, consistent à coder, au sein du logiciel à contrôler lui-même, les variables intervenant dans chaque instruction par une transformation prédéterminée. Si l'instruction est exécutée correctement, le résultat obtenu après exécution présente une cohérence attendue. De plus, le codage effectué est tel que seule l'instruction prévue pour être la suivante est capable de décoder le résultat obtenu et par conséquent de permettre la poursuite de l'exécution.

Les processeurs codés connus sont très complexes et surtout coûteux en temps de calcul, car le codage qui y est effectué allonge sensiblement la durée d'exécution de chaque instruction, ce qui pénalise l'exécution du logiciel à contrôler.

On connaît par ailleurs d'autres procédés de détection des erreurs d'exécution d'un logiciel. La mise en oeuvre de ces procédés nécessite un investissement supplémentaire en matériel, mais est plus simple et moins coûteuse en temps de calcul que celle des processeurs codés. Ces procédés sont décrits dans l'article intitulé "Concurrent Error Detection Using Watchdog Processors - A Survey" paru dans IEEE Transactions on Computers, Vol. 37, N°2, Février 1988, pages 160 à 174.

En pratique, on utilise pour mettre en oeuvre ces procédés un processeur auxiliaire, dit processeur de contrôle (ou "Watchdog Processor"), au sein duquel est implanté un logiciel dit de surveillance. Ce processeur est installé sur le bus reliant le processeur central (CPU), destiné à exécuter le logiciel à contrôler, à la mémoire centrale conservant les instructions de ce logiciel.

Le processeur de contrôle est muni d'une mémoire (qui peut être la mémoire centrale) où sont stockées des données numériques appelées signatures de référence ; chaque chemin licite au sein du logiciel est associé à une signature de référence élaborée lors de la compilation du logiciel.

On sait que chaque instruction du logiciel est représentée en mémoire par une constante numérique (ou "opcode"). C'est cette constante numérique, que l'on appellera identifiant élémentaire, qui sert à élaborer les signatures de référence. Ainsi, la signature de référence de chaque chemin licite est déterminée lors de la compilation du logiciel en effectuant une combinaison particulière des identifiants élémentaires des instructions qui le constituent.

D'autre part, chaque instruction exécutée est "vue" par le processeur de contrôle puisque ce dernier est installé sur le bus reliant la mémoire centrale au processeur central. Le processeur de contrôle est programmé pour utiliser les identifiants élémentaires associés aux instructions qu'il "voit" passer et élaborer au fur et à mesure et selon la même combinaison que pour les signatures de référence une signature dite courante à partir de ces identifiants élémentaires. Les instructions exécutées sont donc identifiées en contrôlant le bus interne et les échanges mémoire centrale-processeur central.

A la fin de l'exécution, la signature courante est comparée à l'ensemble des signatures de référence mises en mémoire. Si la signature courante appartient à cet ensemble, on admet que l'exécution s'est déroulée sans erreurs, et par conséquent que son résultat peut être considéré comme exact. Si en revanche la signature courante n'appartient pas à l'ensemble des signatures de référence, on est certain qu'une ou plusieurs erreurs sont apparues lors de l'exécution. Dans ce cas, le processeur de contrôle indique à l'utilisateur, par un moyen quelconque, que le résultat de l'exécution est erroné.

L'incorporation de matériel supplémentaire au système contenant le logiciel à contrôler pour mettre en oeuvre le procédé décrit ci-dessus est très coûteuse.

On pourrait alors penser à insérer les instructions du logiciel implanté au sein du processeur de contrôle directement dans le logiciel à contrôler. Une telle transposition n'est pas envisageable car le processeur de contrôle, qui se trouve sur le bus reliant la mémoire centrale au processeur central, connaît les instructions exécutées et donc leurs identifiants élémentaires ; en revanche lorsque l'on se trouve au sein du logiciel à contrôler, seuls sont accessibles les résultats des opérations exécutées, et les identifiants élémentaires ne sont pas disponibles.

Enfin, la méthode du processeur de contrôle ne permet en général que de vérifier si le chemin emprunté est licite, et pas s'il est correct. En effet, le processeur de contrôle utilise l'identifiant élémentaire de l'instruction qui va être exécutée, mais il n'est pas capable de déterminer si, à la suite d'un test, l'instruction exécutée est celle qui convient.

Le but de la présente invention est de mettre au point un procédé de détection des erreurs d'exécution d'un logiciel capable d'être mis en oeuvre au sein du logiciel à contrôler, de même qu'un processeur codé, mais plus simple et moins coûteux en temps de calcul que ce dernier.

La présente invention propose à cet effet un procédé de détection des erreurs d'exécution d'un logiciel, ledit logiciel comprenant des instructions reliées entre elles par des branchements et constituées :

- soit d'opérations mettant en jeu un opérateur agissant sur des opérandes afin de mettre à jour le contenu d'une variable,
- soit de tests conditionnels dont le résultat sert à déterminer l'instruction suivante à exécuter,
- soit d'indications de destination donnant directement l'instruction suivante à exécuter,

les parcours autorisés dudit logiciel, appelés chemins licites, étant représentés par des suites d'instructions se succédant selon des branchements dudit logiciel, et chaque exécution dudit logiciel étant représentée par une suite, appelée chemin exécuté, d'instructions exécutées les unes après les autres,
ledit procédé consistant à :

- déterminer lors de la compilation dudit logiciel, une donnée de référence, appelée signature de référence, pour chacun desdits chemins licites, par combinaison de constantes numériques appelées identifiants élémentaires prédéterminés et associées à chacune desdites instructions, lesdites signatures de référence étant mises en mémoire,
- calculer, lors de chaque exécution, une variable appelée signature courante, affectée au chemin exécuté correspondant à ladite exécution, par combinaison de valeurs numériques appelées identifiants élémentaires d'exécution et associées à chacune desdites instructions,
- vérifier si ladite signature courante appartient à l'ensemble desdites signatures de référence,
- signaler une erreur d'exécution si ladite signature courante n'appartient pas à l'ensemble desdites signatures de référence,

ledit procédé étant caractérisé en ce que la détermination desdites signatures de références et le calcul desdites signatures courantes sont effectués en additionnant les représentations binaires desdits identifiants élémentaires, chacune desdites représentations binaires étant modifiée avant d'être sommée de sorte qu'elle dépend du numéro d'ordre de l'instruction correspondante respectivement dans le chemin licite considéré et dans la suite des instructions exécutées.

La modification effectuée peut être par exemple un décalage, et les identifiants décalés sont de préférence additionnés sans retenue pour obtenir les signatures recherchées.

Contrairement à la méthode du processeur de contrôle, qui prévoit une combinaison complexe des identifiants élémentaires difficile à transposer au sein du processeur central, car coûteuse en temps de calcul, le procédé selon l'invention consiste simplement à faire la somme des identifiants élémentaires, et pour compenser la perte d'information résultant du compactage ainsi effectué, à modifier les représentations binaires des identifiants élémentaires avant de les additionner, par exemple en les décalant. Le décalage ainsi effectué est une opération simple et peu coûteuse en temps de calcul. Il permet en outre de détecter les erreurs d'exécution dues à la permutation d'instructions.

Selon un mode de réalisation préféré, le décalage est effectué en multipliant la représentation binaire de chaque identifiant élémentaire par une puissance de deux choisie arbitrairement, cette puissance de deux étant fonction du numéro d'ordre de l'instruction correspondante. Ce mode de réalisation est particulièrement simple.

Selon un perfectionnement avantageux, le logiciel à contrôler est répliqué, de sorte qu'il est exécuté R fois en parallèle par R répliques identiques et que le résultat obtenu par la majorité des répliques est considéré comme le résultat de l'exécution. Des signatures de référence sont déterminées pour chaque réplique et une signature courante est calculée lors de chaque exécution pour chaque réplique, la détermination des signatures de référence et le calcul des signatures courantes étant effectués en utilisant pour chacune des répliques une combinaison différente des identifiants élémentaires respectivement prédéterminés et d'exécution.

En pratique, les ensembles de décalages choisis pour le calcul des signatures courantes de chaque réplique sont deux à deux distincts.

Grâce à ce perfectionnement, si une même erreur affecte la majorité des répliques, elle ne conduit pas à considérer comme exact un résultat erroné.

Selon un mode de mise en oeuvre possible, chaque identifiant élémentaire d'exécution est une variable calculée, pour chaque instruction d'opération et de test, à partir des résultats des opérations et des tests exécutés par exécution d'instructions supplémentaires incorporées au logiciel, et de même, la signature courante est calculée en faisant une combinaison des identifiants élémentaires d'exécution au moyen d'instructions supplémentaires incorporées au logiciel.

Une telle mise en oeuvre évite d'avoir recours à un processeur auxiliaire installé entre le processeur central et la mémoire centrale, et permet de faire un calcul de signature plus simple que le codage effectué au sein des processeurs codés et prenant en compte les instructions effectivement exécutées.

Avantageusement, chaque identifiant élémentaire d'exécution est tel que, si l'instruction à laquelle il est affecté est correctement exécutée, il est égal à l'identifiant élémentaire prédéterminé correspondant à cette instruction.

Afin de déterminer l'identifiant élémentaire d'exécution d'une instruction d'opération, chaque opérande mis en jeu dans cette instruction est préalablement modifié au moyen d'une transformation prédéterminée programmée au sein d'une instruction supplémentaire précédant cette instruction d'opération, de sorte que la représentation binaire du résultat obtenu après application aux opérandes ainsi modifiés d'une fonction dépendant de l'opérateur associé à l'instruction d'opération comporte deux parties séparables, une première de ces parties contenant le résultat de l'opération effectuée sur les opérandes et une deuxième de ces parties contenant l'identifiant élémentaire d'exécution de l'instruction d'opération. On peut ainsi très facilement extraire l'identifiant de l'opération du résultat de cette dernière, par exemple en effectuant dans une instruction supplémentaire une opération de ET logique entre le résultat obtenu et une constante adaptée.

Les opérations à effectuer pour calculer les identifiants élémentaires d'exécution des instructions d'opérations sont donc simples.

Par ailleurs, l'identifiant élémentaire d'exécution d'une instruction de test est calculé, par une instruction supplémentaire précédant immédiatement l'instruction suivant le test, par combinaison logique de la variable faisant l'objet de la condition de l'instruction de test considérée et d'une constante prédéterminée.

Selon une autre caractéristique avantageuse, lorsqu'un ensemble d'instructions, appelé boucle, est exécuté par itérations plusieurs fois de suite, la signature courante partielle obtenue par combinaison des identifiants élémentaires d'exécution des instructions de la boucle est retirée de la signature courante après chaque exécution de la boucle ultérieure à la première exécution de la boucle, et les signatures de référence des chemins possibles contenant l'ensemble d'instructions considéré sont déterminées en prenant en compte une seule fois les identifiants élémentaires prédéterminés des instructions de cet ensemble.

Enfin, les identifiants élémentaires d'exécution des instructions de destination peuvent être calculés par une instruction supplémentaire suivant chaque instruction de destination et affectant à l'identifiant élémentaire d'exécution une constante prédéterminée égale à l'identifiant élémentaire prédéterminé.

D'autres caractéristiques et avantages du procédé selon l'invention apparaîtront dans la description suivante d'un mode de mise en oeuvre particulier de ce procédé, donné à titre illustratif et nullement limitatif.

Dans tout ce qui suit, on prendra l'exemple d'un logiciel simple écrit ci-dessous. Ce logiciel comprend tous les types d'instructions mentionnés plus haut.

```
        r₁ = x₁T₁y₁                    1
        ...
label rᵢ = xᵢTᵢyᵢ                      i
        ...
        rⱼ = xⱼTⱼyⱼ                    j
        if xₖ ≥ 0 then                 k
           goto label
        else
           r₁ = x₁T₁y₁                 l
           ...
        endif
        ...
        stop
```

Les variables notées r sont les résultats des instructions d'opération, numérotées 1, i, j et l. Les opérandes de ces opérations sont notés x et y, et les opérateurs, supposés binaires pour des raisons de clarté, sont notés T. Les indices représentent le numéro de l'opération ou de l'instruction considérée.

Selon l'invention, dans un premier temps, on insère dans le logiciel tel que présenté ci-dessus des instructions spécifiques, dites supplémentaires, permettant notamment de calculer l'identifiant élémentaire, dit d'exécution, de chaque instruction effectivement exécutée, après exécution de cette dernière.

Plus précisément, lors de la compilation du logiciel précédent, chaque instruction est associée à un identifiant élémentaire dit prédéterminé, sous forme de nombre entier par exemple. Ainsi, l'instruction 1 est associée à un identifiant élémentaire prédéterminé $I_{T_1}$ spécifique de l'opérateur $T_1$, et il en est de même pour toutes les autres instructions d'opérations i, j et 1, associées respectivement aux identifiants élémentaires prédéterminés $I_{Ti}$, $I_{Tj}$ et $I_{Tl}$.

L'instruction k est, elle, associée à deux identifiants notés $I_{then,p}$ et $I_{else,p}$, le premier de ces identifiants correspondant à une réponse positive au test de l'instruction k, et le second à une réponse négative.

Enfin, les instructions de destination "goto" et "stop" sont également associées à des identifiants notés respectivement $I_{goto}$ et $I_{stop}$.

Les valeurs de tous les identifiants élémentaires prédéterminés sont en général choisies arbitrairement, chaque type d'instruction étant associé à un identifiant élémentaire distinct.

Pour détecter d'éventuelles erreurs, il faut pouvoir effectuer une comparaison entre des données de référence et des variables calculées lors de l'exécution. Les identifiants élémentaires d'exécution doivent donc être identiques, s'il n'y a pas d'erreur d'exécution, à ceux définis lors de la compilation.

Ainsi, les identifiants élémentaires d'exécution des instructions d'opération doivent être indépendants des opérandes intervenant dans ces opérations et de plus, ne dépendre que des opérateurs appliqués, puisque seuls ces derniers sont connus lors de la compilation.

Selon l'invention, pour calculer l'identifiant élémentaire d'exécution d'une instruction d'opération, les opérandes intervenant dans cette opération sont transformées par une transformation préétablie telle que le résultat d'une fonction dépendant de l'opérateur de l'instruction considérée appliquée à ces opérandes transformés contient l'identifiant recherché.

Pour un opérateur binaire T quelconque, dont l'identifiant élémentaire prédéterminé est noté $I_T$, on définit trois fonctions notées $R_T$, $X_T$ et $Y_T$ telles que, quel que soit le couple d'opérandes (x, y) auquel doit être appliqué l'opérateur T, on a :

$$R_T(X_T(x, y), Y_T(x, y)) = p_T(xTy) + q_T I_T.$$

$X_T$ et $Y_T$ sont les transformations permettant de modifier les opérandes, ces transformations faisant intervenir des constantes $p_T$ et $q_T$. $R_T$ peut être par exemple le résultat obtenu en appliquant l'opérateur T aux transformations $X_T$ et $Y_T$ des opérandes x et y. Dans certains cas, $R_T$ peut être plus complexe (voir plus loin).

En combinant le résultat $R_T$ et des constantes convenables, appelées "masques", par l'intermédiaire d'un ET logique par exemple, on peut extraire de $R_T$ le résultat r = xTy d'une part, et d'autre part l'identifiant $I_T$. On choisit pour cela les constantes $p_T$ et $q_T$ de manière adaptée.

Par exemple, pour la soustraction entière, notée "-", on peut choisir $p_-$ égal à $2^d$, $q_-$ égal à 1 et $I_-$ égal à $c_1$-$c_2$ ($c_1$ et $c_2$ sont des constantes entières arbitraires et d est un entier), et poser :

$$X_-(x, y) = 2^d x + c_1$$

$$Y_- (x, y) = 2^d y + c_2$$

$$R_-(X_-, Y_-) = 2^d(x-y) + (c_1-c_2) = X_- - Y_-$$

Pour obtenir $I_-$ à partir du résultat $R_-$, il suffit par exemple de combiner $R_-$ avec $(2^d-1)$ par un ET logique. En effet, si d est suffisamment grand, la représentation binaire de $R_-$ comporte deux parties distinctes et facilement séparables, une première de ces parties contenant l'identifiant $I_-$ et une deuxième le résultat x-y.

Ce qui précède s'applique sans problème au cas où les opérandes sont des entiers. Dans le cas où les opérandes sont des décimaux flottants, ils sont représentés dans une base $\beta$ par exemple par un bit de signe suivi de plusieurs bits d'exposant (puissance de la base $\beta$) et de plusieurs bits de mantisse.

Le tableau ci-dessous donne, pour les opérateurs T les plus courants, des exemples de fonctions $X_T$, $Y_T$ et $R_T$, d'identifiants $I_T$ et de masques correspondants. Pour l'addition et la soustraction sur des entiers (notées avec un indice z), le ET et le OU logiques, la fonction $R_T$ peut être simplement l'application de l'opérateur T à $X_T$ et $Y_T$. En revanche, la fonction $R_T$ est plus complexe pour la multiplication entre entiers (notée $x_z$).

| T | $X_T(x,y)$ | $Y_T(x,y)$ | $R_T(X,Y)$ | masque | $I_T$ |
|---|---|---|---|---|---|
| $+z$ $-z$ $\wedge$ $\vee$ | $2^d x + c_1$ | $2^d y + c_2$ | $X$ T $Y$ | $2^d - 1$ | $c_1$ T $c_2$ |
| $x_z$ | $2^d x + c_1$ | $2^d y + c_2$ | $XY - c_2 X - c_1 Y + 2c_1 c_2$ | $2^{2d} - 1$ | $c_1 c_2$ |

Ainsi, au moyen d'instructions simples incorporées au sein du logiciel à contrôler, on peut calculer au cours de l'exécution l'identifiant d'une instruction d'opération une fois que cette dernière a été exécutée.

Les identifiants élémentaires d'exécution des instructions de destination sont déterminés arbitrairement : on leur affecte, dans une instruction supplémentaire suivant l'instruction de destination considérée, la valeur de l'identifiant élémentaire prédéterminé de la compilation pour l'instruction correspondante.

Pour ce qui est du calcul des identifiants élémentaires d'exécution des instructions de test, le procédé selon l'invention propose une méthode simple que l'on va exposer à présent.

N'importe quel test peut se ramener à une ou plusieurs conditions de la forme "x $\geq$ 0 ?" ou "x = c ?", où c est une constante et x la variable à tester. Le raisonnement est identique pour les entiers ou pour les décimaux flottants représentés de la manière décrite précédemment. On présentera donc la méthode sur des entiers, par souci de clarté.

On dispose en général de bien plus de bits pour représenter x en binaire qu'il n'est nécessaire. On appellera m le nombre de bits disponibles, et p le nombre de bits suffisant à représenter x ($0 \leq |x| \leq 2^{p-1}$). Les entiers négatifs sont représentés par leur complément à 2 ; par conséquent, la représentation de -x possède m-p bits égaux à 1. Si l'on pose $M = 2^m-2^p$, on a, quel que soit x de valeur absolue inférieure à $2^p$ :

$$(M \wedge x = M) \Leftrightarrow x < 0$$

$$(M \wedge x = 0) \Leftrightarrow x \geq 0.$$

Dans le cas où la condition à vérifier est "x $\geq$ 0 ?", si l'on pose à la compilation $I_{then,p}$ et $I_{else,p}$ égaux à M, et si l'on calcule les identifiants correspondants à l'exécution (notés respectivement $I_{then,ex}$ et $I_{else,ex}$) selon les formules :

$$I_{then,ex} = (M \wedge \neg x)$$

$$I_{else,ex} = (M \wedge x),$$

$\neg x$ étant le complément à 1 de x, les identifiants élémentaires d'exécution sont bien égaux aux identifiants élémentaires prédéterminés si le chemin exécuté est correct.

En effet, dans le cas du logiciel pris comme exemple, si la réponse au test "$x_k \geq 0$ ?" est positive (c'est-à-dire que $x_k$ est positif ou nul) et que le logiciel exécute ensuite l'instruction 1, l'identifiant calculé et pris en compte dans la signature courante est $I_{else,ex}$, qui est alors égal à 0, alors que le processeur attend un identifiant égal à M. On détecte ainsi une erreur de branchement, c'est-à-dire que le chemin exécuté, bien que licite, n'est pas correct.

Par ailleurs, dans le cas où la condition à vérifier est "x = c ?", si c est strictement inférieur à $2^P$, on a, de même que précédemment :

$$[(M \wedge (x-c)) \oplus (M \wedge (c-x))] = M \Leftrightarrow x \neq c.$$

On pose alors à la compilation $I_{then,p}$ et $I_{else,p}$ égaux à M, et l'on calcule $I_{then,ex}$ et $I_{else,ex}$ selon les formules suivantes :

$$I_{then,ex} = x \oplus c \oplus M$$

$$I_{else,ex} = (M \wedge (x-c)) \oplus (M \wedge (c-x))$$

Dans tous les cas, l'expression utilisée pour calculer l'identifiant élémentaire d'exécution de l'instruction de test donne un résultat qui indique si la branche suivie lors de l'exécution est cohérente avec le résultat du test de l'instruction.

Contrairement à la méthode de l'art antérieur utilisant un processeur de contrôle, le procédé de l'invention permet donc de vérifier si le chemin exécuté est correct, et ceci par une méthode simplifiée par rapport à la méthode de codage complexe du processeur codé.

Toujours selon l'invention, afin de détecter les erreurs d'exécution, on procède, à l'aide de tous les identifiants élémentaires d'exécution, au calcul d'une variable, appelée signature courante du chemin exécuté. La signature courante est un nombre entier représentatif du chemin exécuté. Cette signature courante, notée Sc, est obtenue, selon l'invention, en faisant la somme bit à bit et modulo 2 des représentations binaires des identifiants élémentaires d'exécution calculés.

Toutefois, une simple somme entraîne une perte d'informations importante, puisqu'elle compacte l'information. Par conséquent, de nombreux chemins exécutés risquent d'avoir la même signature courante, ce qui ne permet pas de détecter les erreurs d'exécution de manière fiable.

La présente invention propose donc en outre de multiplier préalablement la représentation binaire de chaque identifiant élémentaire d'exécution par une puissance de deux, ce qui revient à effectuer un décalage des bits de cette dernière. On choisit donc une suite arbitraire d'entiers naturels, dite suite de décalages et notée $(d_i)_{i=1,N}$, et si l'on note $I_i$ (i variant de 1 à N) les identifiants élémentaires d'exécution de toutes les instructions d'un chemin exécuté, ce chemin comptant N instructions, on a :

$$Sc = \bigoplus_{i=1}^{N} 2^{d_i} I_i .$$

En pratique, on munit la signature courante d'un "compteur" incrémenté de 1 après chaque instruction exécutée. Ceci permet de connaître le numéro d'ordre de chaque instruction exécutée afin d'affecter à l'identifiant élémentaire d'exécution de cette instruction le décalage correspondant. Après chaque instruction exécutée, la valeur de Sc est modifiée en lui ajoutant l'identifiant de cette instruction multiplié par la puissance de deux correspondante et par une puissance de deux constante, notée $2^D$, qui permet de séparer dans la représentation binaire de la signature courante calculée la partie correspondant à la signature courante de la partie compteur. On a donc en fait, à la fin de l'exécution :

$$\mathrm{Sc} = \mathrm{N} \oplus \bigoplus_{i=1}^{N} 2^{d_i + D} \, \mathrm{I}_i .$$

Il n'est toutefois pas essentiel d'insérer le compteur au sein de la signature courante. Toute autre méthode de comptage des instructions exécutées peut être employée.

On va maintenant décrire en détail un exemple d'instructions supplémentaires permettant la mise en oeuvre du procédé selon l'invention, dont les principes ont été exposés ci-dessus.

Une instruction d'opération du type r = xTy est remplacée par les instructions :

$$X = X_T(x, y)$$

$$Y = Y_T(x, y)$$

$$R_T = R_T(X, Y)$$

$$Sc = (1 + Sc) \oplus 2^{d[Sc \wedge Mcpt] + D}(R_T \wedge M_T)$$

où $X_T$, $Y_T$ et $R_T$ ont été définis précédemment, Mcpt est tel que combiné par un ET logique à Sc, il permet d'extraire seulement la partie compteur de Sc, $M_T$ est tel que combiné par un ET logique avec $R_T$, il permet d'obtenir la partie identifiant de $R_T$, c'est-à-dire l'identifiant de l'opération, et d[i] est égal à $d_i$.

Si le résultat r doit être utilisé ultérieurement, il suffit pour l'extraire d'ajouter une instruction supplémentaire pour combiner $R_T$ par un ET logique avec un masque adapté.

Une instruction de destination est simplement suivie de l'instruction :

$$Sc = (1 + Sc) \oplus 2^{d[Sc \wedge Mcpt] + D} I_{dest}$$

où $I_{dest}$ est l'identifiant élémentaire prédéterminé de l'instruction de destination correspondante.

Dans le cas d'une instruction de test du type "x ≥ 0 ?", l'instruction "then" est suivie de l'instruction :

$$Sc = (1 + Sc) \oplus 2^{d[Sc \wedge Mcpt] + D}(M \wedge \neg x),$$

et l'instruction "else" est suivie de l'instruction :

$$Sc = (1 + Sc) \oplus 2^{d[Sc \wedge Mcpt] + D}(M \wedge x).$$

Les deux instructions supplémentaires précédentes sont adaptées simplement en remplaçant les identifiants par ceux décrits plus haut dans le cas où le test est du type "x = c ?"

D'après ce qui précède, le logiciel pris comme exemple peut être modifié de la manière suivante pour permettre le calcul de la signature (on n'a pas indiqué les instructions permettant d'extraire les résultats $r_1$, $r_i$, $r_j$ et $r_l$ de $R_1$, $R_i$, $R_j$ et $R_l$ respectivement) :

```
        Sc = 0
        R₁ = X₁T₁Y₁
        Sc = (1 + Sc) ⊕ 2^d[Sc∧Mcpt]+D(R_T1∧M_T1)
        ...
label   Rᵢ = XᵢTᵢYᵢ
        Sc = (1 + Sc) ⊕ 2^d[Sc∧Mcpt]+D(R_Ti∧M_Ti)
        ...
        Rⱼ = XⱼTⱼYⱼ
        Sc = (1 + Sc) ⊕ 2^d[Sc∧Mcpt]+D(R_Tj∧M_Tj)
        if xₖ ≥ 0 then
        Sc = (1 + Sc) ⊕ 2^d[Sc∧Mcpt]+D(M∧¬xₖ)
           goto label
           Sc = (1 + Sc) ⊕ 2^d[Sc∧Mcpt]+DI_goto
        else
        Sc = (1 + Sc) ⊕ 2^d[Sc∧Mcpt]+D(M∧xₖ)
           R₁ = X₁T₁Y₁
           Sc = (1 + Sc) ⊕ 2^d[Sc∧Mcpt]+D(R_T1∧M_T1)
           ...
        endif
        ...
        stop
```

Lors de la compilation, on effectue exactement de la même manière le calcul des signatures de référence de chaque chemin licite dans le logiciel à contrôler en remplaçant les instructions de calcul des identifiants élémentaires d'exécution par des instructions d'affectation des identifiants élémentaires prédéterminés.

Dans certaines applications, où une fiabilité accrue est demandée, au lieu d'implanter un seul exemplaire du logiciel utilisé, on en implante plusieurs exemplaires identiques appelés répliques. Toutes les répliques sont exécutées en parallèle, à partir des mêmes données d'entrée, et le résultat considéré comme le résultat de l'exécution est choisi comme étant le résultat fourni par la majorité des répliques, ou par un nombre prédéterminé d'entre elles.

La réplication peut également consister à exécuter R fois séquentiellement le logiciel à contrôler, et à sélectionner le résultat considéré comme exact de la même manière que précédemment, une fois les R exécutions terminées.

Une telle méthode, qui fait appel au principe de la redondance, est fiable car elle permet de poursuivre l'exécution même si une ou plusieurs répliques sont défaillantes, du moment qu'une même erreur n'affecte pas la majorité des répliques. Si une même erreur affecte la majorité des répliques (on appelle une telle erreur "erreur générique"), le résultat considéré comme exact est en fait erroné.

Selon l'invention, dans ce type d'applications, pour éviter les problèmes engendrés par les erreurs génériques, on détermine pour chaque réplique un ensemble de signatures de référence, et, à l'exécution, on calcule une signature courante, en utilisant une combinaison particulière des identifiants élémentaires prédéterminés et d'exécution respectivement. Cette combinaison est différente pour chacune des répliques.

En pratique, on choisit une suite de décalages distincte pour chaque réplique (les suites de décalages sont donc deux à deux distinctes), de sorte qu'une erreur générique n'affecte pas de la même manière les signatures courantes de chacune des répliques. Ceci permet donc d'éviter qu'en cas d'erreur générique, un résultat erroné soit considéré comme exact.

Selon un autre perfectionnement avantageux de la présente invention, il est possible de simplifier le calcul de la signature lorsqu'un ensemble d'instructions (boucle) est répété plusieurs fois de suite (itérations). Il est bien évident que le nombre d'itérations de cette boucle dépend du contexte de l'exécution en cours et ne peut être prévu lors de la compilation. Ceci pose donc un problème lors de la détermination des signatures de référence.

Afin de remédier à ce problème, on détermine les signatures de référence à la compilation en supposant qu'il n'y a qu'une seule exécution de la boucle considérée.

Lors de l'exécution, on calcule la signature courante en tenant compte d'une seule exécution de la boucle considérée. Si le contexte d'exécution entraîne une ou plusieurs itérations, on retire de la signature courante, à la fin de chaque itération, la signature partielle prenant en compte les identifiants élémentaires d'exécution des instructions appartenant à cette boucle.

Ainsi, lorsqu'il n'y a pas d'itérations de la boucle considérée, la signature courante calculée est identique (s'il n'y a pas d'erreurs d'exécution) à la signature de référence calculée lors de la compilation.

S'il y a une ou plusieurs itérations de cette boucle et que ces itérations sont exécutées sans erreur, la signature courante obtenue finalement appartient à l'ensemble des signatures de référence. En revanche, s'il y a une erreur d'exécution lors de l'une des itérations, le résultat obtenu lorsque l'on retire la signature partielle de la boucle considérée n'appartient pas à l'ensemble des signatures de référence.

Une autre méthode permettant de remédier au problème posé par l'itération d'une boucle lors de l'exécution consiste à procéder à une justification des signatures. Une telle méthode est décrite aux pages 164 et 165 de l'article mentionné précédemment et ne sera pas décrite plus en détails ici.

Alors que le procédé de calcul de la signature courante employé dans la méthode du processeur de contrôle est complexe à mettre en oeuvre, celui de l'invention est simple de par le calcul de signature utilisé.

Le procédé selon l'invention permet donc de détecter de manière simple, au moyen d'instructions insérées au sein du logiciel à contrôler, des erreurs dans l'exécution de ce logiciel, et en particulier des erreurs dans le flot d'exécution, ces erreurs pouvant par exemple provenir du fait qu'une opération est ajoutée, supprimée ou modifiée lors de l'exécution par rapport à ce qui a été prévu lors de la compilation, ou qu'un branchement (conditionnel ou inconditionnel) est erroné.

Les erreurs autres que celles de flot d'exécution ont en général pour conséquence des erreurs de flot d'exécution. On considère ainsi que la détection des erreurs de flot d'exécution conduit à la détection de 95% des erreurs opératoires ou de dépendance. Le procédé selon l'invention permet donc de détecter la plupart des erreurs d'exécution.

Le procédé selon l'invention suppose bien évidemment que les instructions sont toujours exécutées à l'aide des opérandes corrects, et qu'il existe un seul point d'entrée au logiciel à contrôler.

Grâce au procédé selon l'invention, la probabilité de ne pas détecter une erreur est au plus égale à $6.10^{-8}$ lorsque les identifiants élémentaires sont représentés sur 16 bits et les termes de la suite de décalage utilisés dans le calcul de signature inférieurs ou égaux à 8.

Avec certaines hypothèses, cette probabilité est égale à $1.10^{-17}$ lorsque les identifiants élémentaires sont codés sur 32 bits et que les termes de la suite de décalage utilisés dans le calcul de signature inférieurs ou égaux à 24.

Par comparaison, la probabilité de ne pas détecter une erreur avec la méthode du processeur codé est de $10^{-12}$, et de $10^{-1}$ à $10^{-4}$ avec la méthode du processeur de contrôle.

De manière plus générale, avec le procédé de l'invention, la probabilité de ne pas détecter une erreur est inférieure ou égale au produit du nombre des signatures de référence par $2^{-(n+max\{di\})}$ où $n$ est le nombre de bits servant à la représentation binaire des identifiants élémentaires, et $max\{d_i\}$ est la valeur maximale des termes de la suite de décalage utilisée dans le calcul de signature.

Le procédé selon l'invention peut aisément être mis en oeuvre en ajoutant des instructions simples et rapides à exécuter dans le logiciel à contrôler. Il ne nécessite donc pas l'utilisation d'un processeur de contrôle auxiliaire, et est moins complexe et coûteux en temps de calcul que le processeur codé.

Bien évidemment, l'invention n'est pas limitée au mode de mise en oeuvre qui vient d'être décrit.

En particulier, les méthodes utilisées pour calculer les identifiants élémentaires d'exécution et les signatures courantes et de référence sont données à titre indicatif, et bien d'autres moyens équivalents sont à la portée de l'homme de l'art qui peut les utiliser sans sortir du cadre de l'invention.

Par exemple, la signature courante peut être calculée en fin d'exécution au lieu d'être déterminée au fur et à mesure. Pour cela, il suffit de mettre en mémoire tous les identifiants élémentaires d'exécution calculés au fur et à mesure.

D'autre part, pour le calcul des signatures, lorsque le nombre de bits nécessaire à la représentation binaire des identifiants élémentaires n'est pas suffisant pour effectuer le décalage souhaité, les bits de rang le plus élevé (ou de rang le plus faible) qui se trouveraient éventuellement en dehors de la zone disponible peuvent être replacés au niveau des bits de rang le plus faible (ou de rang le plus élevé), ce qui revient à effectuer une permutation circulaire sur les représentations binaires des identifiants élémentaires.

## Revendications

1. Procédé de détection des erreurs d'exécution d'un logiciel, ledit logiciel comprenant des instructions reliées entre elles par des branchements et constituées :

   - soit d'opérations mettant en jeu un opérateur agissant sur des opérandes afin de mettre à jour le contenu d'une variable,
   - soit de tests conditionnels dont le résultat sert à déterminer l'instruction suivante à exécuter,
   - soit d'indications de destination donnant directement l'instruction suivante à exécuter,

   les parcours autorisés dudit logiciel, appelés chemins licites, étant représentés par des suites d'instructions se succédant selon des branchements dudit logiciel, et chaque exécution dudit logiciel étant représentée par une suite, appelée chemin exécuté, d'instructions exécutées les unes après les autres,
   ledit procédé consistant à :

   - déterminer lors de la compilation dudit logiciel, une donnée de référence, appelée signature de référence, pour chacun desdits chemins licites, par combinaison de constantes numériques appelées identifiants élémentaires prédéterminés et associées à chacune desdites instructions, lesdites signatures de référence étant mises en mémoire,
   - calculer, lors de chaque exécution, une variable appelée signature courante, affectée au chemin exécuté correspondant à ladite exécution, par combinaison de valeurs numériques appelées identifiants élémentaires d'exécution et associées à chacune desdites instructions,
   - vérifier si ladite signature courante appartient à l'ensemble desdites signatures de référence,
   - signaler une erreur d'exécution si ladite signature courante n'appartient pas à l'ensemble desdites signatures de référence,

   ledit procédé étant caractérisé en ce que la détermination desdites signatures de références et le calcul desdites signatures courantes sont effectués en additionnant les représentations binaires desdits identifiants élémentaires, chacune desdites représentations binaires étant modifiée avant d'être sommée de sorte qu'elle dépend du numéro d'ordre de l'instruction correspondante respectivement dans le chemin licite considéré et dans la suite des instructions exécutées.

2. Procédé selon la revendication 1 caractérisé en ce que lesdites représentations binaires desdits identifiants sont décalés avant d'être additionnés les uns aux autres sans retenue afin de déterminer ou calculer les signatures de référence ou courante.

3. Procédé selon la revendication 2 caractérisé en ce que ledit décalage est effectué en multipliant la représentation binaire de chaque identifiant élémentaire par une puissance de deux choisie arbitrairement, ladite puissance de deux étant fonction dudit numéro d'ordre de l'instruction correspondante.

4. Procédé selon l'une des revendications 1 à 3 caractérisé en ce que ledit logiciel est répliqué, de sorte qu'il est exécuté R fois en parallèle par R répliques identiques et que le résultat obtenu par la majorité desdites répliques est considéré comme le résultat de l'exécution, des signatures de référence étant déterminées pour chaque réplique et une signature courante étant calculée lors de chaque exécution pour chaque réplique, la détermination desdites signatures de référence et le calcul desdites signatures courantes étant effectués en utilisant pour chacune desdites répliques une combinaison différente desdits identifiants élémentaires respectivement prédéterminés et d'exécution.

5. Procédé selon les revendications 3 et 4 caractérisé en ce que les ensembles de décalages choisis pour le calcul desdites signatures courantes de chacune desdites répliques sont deux à deux distincts.

6. Procédé selon l'une des revendications 1 à 5 caractérisé en ce que chacun desdits identifiants élémentaires d'exécution est une variable calculée, pour chaque instruction d'opération et de test, à partir des résultats desdites opérations et desdits tests exécutés par exécution d'instructions supplémentaires incorporées audit logiciel, et de même, ladite signature courante est calculée en faisant une combinaison desdits identifiants élémentaires d'exécution au moyen d'instructions supplémentaires incorporées audit logiciel.

7. Procédé selon l'une des revendications 1 à 6 caractérisé en ce que chaque identifiant élémentaire d'exécution est tel que, si l'instruction à laquelle il est affecté est correctement exécutée, il est égal à l'identifiant élémentaire prédéterminé correspondant à cette instruction.

8. Procédé selon l'une des revendications 1 à 7 caractérisé en ce que, pour déterminer l'identifiant élémentaire d'exécution d'une instruction d'opération, chaque opérande mis en jeu au sein dans une instruction d'opération est préalablement modifié, par une transformation prédéterminée programmée au sein d'une instruction supplémentaire précédant ladite instruction d'opération, de sorte que la représentation binaire du résultat obtenu après application auxdites opérandes ainsi modifiés d'une fonction dépendant de l'opérateur associé à ladite instruction d'opération comporte deux parties séparables, une première desdites parties contenant le résultat de l'opération effectuée sur les opérandes et une deuxième desdites parties contenant ledit identifiant élémentaire d'exécution de ladite instruction d'opération.

9. Procédé selon la revendication 8 caractérisé en ce que, pour prélever ledit identifiant élémentaire d'exécution dudit résultat, on effectue dans une instruction supplémentaire une opération de ET logique entre ledit résultat partie et une constante adaptée.

10. Procédé selon l'une des revendications 1 à 9 caractérisé en ce que l'identifiant élémentaire d'exécution d'une instruction de test est calculé par une instruction supplémentaire précédant immédiatement l'instruction suivant ledit test, par combinaison logique de la variable faisant l'objet de la condition de ladite instruction de test et d'une constante prédéterminée.

11. Procédé selon l'une des revendications 1 à 10 caractérisé en ce que, lorsqu'un ensemble d'instructions, appelé boucle, est exécuté par itérations plusieurs fois de suite, la signature courante partielle obtenue par combinaison des identifiants élémentaires d'exécution des instructions de ladite boucle est retirée de ladite signature courante après chaque exécution de ladite boucle ultérieure à la première exécution de ladite boucle, et en ce que les signatures de référence des chemins possibles contenant ledit ensemble d'instructions sont déterminées en prenant en compte une seule fois les identifiants élémentaires prédéterminés des instructions dudit ensemble.

12. Procédé selon l'une des revendications 1 à 11 caractérisé en ce que les identifiants élémentaires d'exécution desdites instructions de destination sont calculés par une instruction supplémentaire suivant chaque instruction de destination et affectant à la variable correspondant à l'identifiant élémentaire d'exécution une constante prédéterminée égale à l'identifiant élémentaire prédéterminé correspondant.

**Patentansprüche**

1. Verfahren zur Erfassung der Ausführungsfehler eines Programms, das miteinander über Verzweigungen verbundene Befehle enthält, die

- entweder Operationen sind, die einen Operator verwenden, der Operanden verknüpft und eine variable Größe liefert,
- oder bedingte Sprungbefehle, deren Bedingung dazu dient, den nächsten auszuführenden Befehl zu bestimmen,
- oder unbedingte Sprungbefehle, die unmittelbar den nächsten auszuführenden Befehl ergeben, wobei die zugelassenen Abläufe des Programms durch gemäß den Verzweigungen des Programms aufeinanderfolgende Befehle dargestellt sind und jede Ausführung des Programms durch eine ausgeführter Verlauf genannte Folge von Befehlen repräsentiert wird, die nacheinander abgearbeitet werden,

wobei das Verfahren darin besteht,

- beim Entwurf des Programms eine Bezugsgröße, Bezugssignatur genannt, für jeden der zugelassenen Verläufe durch Kombination von Elementaridentifizierer genannten vorbestimmten Zahlenkonstanten zu bestimmen, die jedem der Befehle zugeordnet sind, wobei die Bezugssignaturen abgespeichert werden,
- bei jeder Ausführung eine Variable zu berechnen, die laufende Signatur genannt wird und dem der Ausführung entsprechenden Verlauf zugewiesen ist, und zwar durch Kombination von Zahlenwerten, die "Elementaridentifizierer der Ausführung" genannt werden und jedem der Befehle zugewiesen sind,
- zu überprüfen, ob die laufende Signatur zur Gruppe von Bezugssignaturen gehört,
- einen Ausführungsfehler zu melden, wenn die laufende Signatur nicht zu der Gruppe von Bezugssignaturen gehört, dadurch gekennzeichnet, daß die Bestimmung der Bezugssignaturen und die Berechnung der laufenden Signaturen erfolgen, indem die binären Darstellungen der Elementaridentifizierer addiert werden, wobei jede der binären Darstellungen modifiziert wird, ehe sie addiert wird, so daß sie von der Rangnummer des entsprechenden Befehls in dem betreffenden zugelassenen Verlauf bzw. in der Folge von ausgeführten Befehlen abhängt.

2. Verfahren nach Anspruch 1, dadurch gekennzeichnet, daß die binären Darstellungen der Identifizierer vor der Addition ohne Übertrag verschoben werden, um die Bezugssignaturen oder laufenden Signaturen zu bestimmen oder zu berechnen.

3. Verfahren nach Anspruch 2, dadurch gekennzeichnet, daß die Verschiebung erfolgt, indem die binäre Darstellung jedes Elementaridentifizierers mit einer frei gewählten Potenz von 2 multipliziert wird, die von der Rangnummer des entsprechenden Befehls abhängt.

4. Verfahren nach einem der Ansprüche 1 bis 3, dadurch gekennzeichnet, daß von dem Programm eine Replik gemacht wird, so daß es R mal parallel in R identischen Repliken durchlaufen wird und daß das von der Mehrheit der Repliken erhaltene Ergebnis als das Ergebnis der Ausführung betrachtet wird, wobei Bezugssignaturen für jede Replik bestimmt werden und eine laufende Signatur bei jeder Ausführung für jede Replik berechnet wird, und daß die Bestimmung der Bezugssignaturen und die Berechnung der laufenden Signaturen unter Verwendung einer unterschiedlichen Kombination der jeweils vorbestimmten Elementaridentifizierer und der Elementaridentifizierer der Ausführung für jede dieser Repliken erfolgt.

5. Verfahren nach den Ansprüchen 3 und 4, dadurch gekennzeichnet, daß die für die Berechnung der laufenden Signaturen jeder der Repliken gewählten Gruppen von Verschiebungen paarweise unterschiedlich sind.

6. Verfahren nach einem der Ansprüche 1 bis 5, dadurch gekennzeichnet, daß jeder der Elementaridentifizierer der Ausführung eine Variable ist, die für jeden Operations- und bedingten Sprungbefehl ausgehend von den Ergebnissen der Operationen und der Sprungbedingungen durch zusätzliche im Programm inkorporierte Befehle berechnet wird, und daß ebenso die laufende Signatur durch Kombination der Elementaridentifizierer der Ausführung mit Hilfe von zusätzlichen im Programm inkorporierten Befehlen berechnet wird.

7. Verfahren nach einem der Ansprüche 1 bis 6, dadurch gekennzeichnet, daß jeder Elementaridentifizierer der Ausführung so ausgebildet ist, daß, wenn der zugeordnete Befehl korrekt ausgeführt wurde, der Elementaridentifizierer der Ausführung dem vorbestimmten Elementaridentifizierer entsprechend diesem Befehl gleicht.

8. Verfahren nach einem der Ansprüche 1 bis 7, dadurch gekennzeichnet, daß zur Bestimmung des Elementaridentifizierers der Ausführung eines Operationsbefehls jeder in einem Operationsbefehl eingesetzte Operand vorher durch eine vorbestimmte und in einem zusätzlichen Befehl vor dem Operationsbefehl programmierte Transformation verändert wurde, so daß die binäre Darstellung des nach Anwendung einer vom dem Operationsbefehl zugeordneten Operator abhängigen Funktion auf die so veränderten Operanden zwei trennbare Teile aufweist, nämlich einen ersten Teil mit dem Ergebnis der auf die Operanden angewendeten Operation und einen zweiten Teil mit dem Elementaridentifizierer der Ausführung des Operationsbefehls.

9. Verfahren nach Anspruch 8, dadurch gekennzeichnet, daß zur Entnahme des Elementaridentifizierers der Ausführung des Resultats in einem zusätzlichen Befehl eine logische UND-Operation zwischen dem Ergebnisteil und einer angepaßten Konstante durchgeführt wird.

10. Verfahren nach einem der Ansprüche 1 bis 9, dadurch gekennzeichnet, daß der Elementaridentifizierer der Ausführung eines bedingten Sprungbefehls durch einen zusätzlichen Befehl unmittelbar vor dem auf den Sprung folgenden Befehl durch logische Kombination der Variablen, die Gegenstand der Sprungbedingung des bedingten Sprungbefehls ist, und einer vorbestimmten Konstante berechnet wird.

11. Verfahren nach einem der Ansprüche 1 bis 10, dadurch gekennzeichnet, daß, wenn eine Gruppe von Befehlen, Schleife genannt, mehrmals nacheinander durchlaufen wird, die partielle laufende Signatur, die durch Kombination der Elementaridentifizierer der Ausführung der Befehle der Schleife erhalten wird, von der laufenden Signatur nach jedem weiteren Schleifendurchlauf abgezogen wird und daß die Bezugssignaturen der möglichen Verläufe für die betrachtete Gesamtheit der Befehle bestimmt werden, indem ein einziges Mal die vorbestimmten Elementaridentifizierer der Befehle der Schleife berücksichtigt werden.

**12.** Verfahren nach einem der Ansprüche 1 bis 11, dadurch gekennzeichnet, daß die Elementaridentifizierer der Ausführung der unbedingten Sprungbefehle nach jedem unbedingten Sprungbefehl durch einen zusätzlichen Befehl berechnet werden, der der Variablen entsprechend dem Elementaridentifizierer der Ausführung eine vorbestimmte Konstante gleich dem entsprechenden vorbestimmten Elementaridentifizierer zuweist.

## Claims

**1.** A method of detecting execution errors in software, said software containing instructions interconnected by branches and constituted by:

operations involving an operator acting on operands so as to update the contents of a variable;
conditional tests whose results serve to determine the respective following instructions to be executed; or destination indications directly giving the respective following instructions to be executed;
the authorized routes of said software, referred to as "permitted paths", being represented by successions of instructions succeeding one another along the branches of said software, and each execution of said software being represented by a succession, referred to as an "executed path", of instructions executed one after another;

said method consisting in:

determining reference data, referred to as a "reference signature", for each of said permitted paths, during compilation of said software, by combining constants referred to as "predetermined elementary identifiers" and associated with respective ones of said instructions, said reference signatures being stored in a memory;
calculating, during each execution, a variable referred to as a "current signature", allocated to the executed path corresponding to said execution, by combining numerical values referred to as "execution elementary identifiers" and associated with respective ones of said instructions;
verifying whether said current signature belongs to the set of said reference signals; and
indicating an execution error if said current signature does not belong to the set of said reference signatures;
said method being characterized in that said reference signatures are determined and said current signatures are calculated by summing the binary representations of said elementary identifiers, each of said binary representations being modified before it is summed so that it depends on the order number of the corresponding instruction respectively in the permitted path in question, and in the succession of executed instructions.

**2.** A method according to claim 1, characterized in that said binary representations of said identifiers are shifted before they are added together without carry, so as to determine or to calculate the reference signatures or the current signatures.

**3.** A method according to claim 2, characterized in that said shifting is performed by multiplying the binary representation of each elementary identifier by a power of two chosen arbitrarily, said power of two being a function of said order number of the corresponding instruction.

**4.** A method according to any one of claims 1 to 3, characterized in that said software is replicated, so that it is executed R times in parallel by R identical replicas, and so that the result obtained by the majority of said replicas is considered to be the result of the execution, reference signatures being determined for each replica, and a current signature being calculated during each execution for each replica, said reference signatures being determined and said current signatures being calculated by using, for each of said replicas, a different combination respectively of said predetermined elementary identifiers and of said execution elementary identifiers.

**5.** A method according to claims 3 and 4, characterized in that the sets of shifts chosen for calculating said current signatures of each of said replicas are distinct in pairs.

**6.** A method according to any one of claims 1 to 5, characterized in that each of said execution elementary identifiers is a variable calculated, for each operation instruction and each test operation, on the basis of said operations and of said tests executed by executing additional instructions incorporated in said software, and similarly said current signature is calculated by combining said execution elementary identifiers by means of additional instructions incorporated in said software.

7. A method according to any one of claims 1 to 6, characterized in that each execution elementary identifier is such that, if the instruction to which it is allocated is executed correctly, it is equal to the predetermined elementary identifier corresponding to said instruction.

8. A method according to any one of claims 1 to 7, characterized in that, to determine the execution elementary identifier of an operation instruction, each operand involved in an operation instruction is pre-modified by a predetermined transformation programmed in an additional instruction preceding said operation instruction, so that the binary representation of the result obtained after applying a function dependent on the operator associated with said operation instruction to said operands as modified comprises two separable portions, a first one of the portions containing the result of the operation performed on the operands, and the second portion containing said execution elementary identifier of said operation instruction.

9. A method according to claim 8, characterized in that, to extract said execution elementary identifier from said result, a logic AND operation is performed in an additional instruction between the result portion and a suitable constant.

10. A method according to any one of claims 1 to 9, characterized in that the execution elementary identifier of a test instruction is calculated by an additional instruction immediately preceding the instruction following said test, by logic combining a predetermined constant with the variable of the condition of said test instruction.

11. A method according to any one of claims 1 to 10, characterized in that, when a set of instructions, referred to as a "loop", is executed by iterations several times over, the current signature portion obtained by combining the execution elementary identifiers of the instructions of said loop is withdrawn from said current signature after each execution of said loop subsequent to the first execution of said loop, and in that the reference signatures of the possible paths containing said set of instructions are determined by taking into account once only the predetermined elementary identifiers of the instructions of said set.

12. A method according to any one of claims 1 to 11, characterized in that the execution elementary identifiers of said destination instructions are calculated by an additional instruction following each destination instruction, and allocating a predetermined constant equal to the corresponding predetermined elementary identifier to the variable corresponding to the execution elementary identifier.